# EUROPEAN PATENT APPLICATION

(11) **EP 1 542 211 A2**
(43) Date of publication of application: **15.06.2005**
(21) Application number: 04028994.4
(22) Date of filing: 07.12.2004
(51) Int. Cl.: G11B 7/007, G11B 7/24

(54) **Optical information recording medium and method of recording bar code-like marks**

(30) Priority: 08.12.2003 JP 2003408596
(71) Applicant: Matsushita Electric Industrial Co., Ltd., Kadoma-shi, Osaka-fu 571-8501 (JP)
(72) Inventor: Abe, Shinya, Kadoma-shi, Osaka-fu (JP)
(74) Representative: Eisenführ, Speiser & Partner

(57) **Abstract**

A reproduction type information recording medium is provided with a plurality of information recording layers (12,14) Including one information recording layer (12) having bar code-like marks (16) subjected to write-once recording. A thermal conductivity of a material of other information recording layers (14) than the one information recording layer (12) is set to be not less than 1.5 times that of a material of the one information recording layer (12).

## Description

### BACKGROUND OF THE INVENTION

### (Field of the Invention)

The present invention generally relates to an optical disc having a plurality of information recording layers and more particularly, to a disc for reproduction only, in which specific information is subjected to write-once recording.

### (Description of the Prior Art)

In a conventional DVD-ROM for reproduction only, bar code-like marks called a burst cutting area (BCA) are worked by burning off a reflective film of an information recording layer with a laser such that write-once recording of data such as a serial number of the medium is performed. For example, Japanese Patent Laid-Open Publication No. 2000-76705 teaches one example of such working method.

However, in a known two-layer DVD-ROM disc, in case one layer (layer 1) is subjected to BCA working of a laser, the BCA working also causes damage to a reflective film of the other layer (layer 0) and thus, working traces are left on the reflective film of the layer 0 through its rupture. In the known DVD-ROM disc, necessary reproduction signal quality can be secured by its comparatively large reproduction spot. However, in a disc having a higher density, for example, a so-called "Blu-ray Disc" having a narrow distance between two information recording layers, such problems arise that shape of edges of BCA marks formed on one information recording layer exerts a strong influence on reproduction signals and the reproduction signals are adversely affected by the working traces left on the other information recording layer.

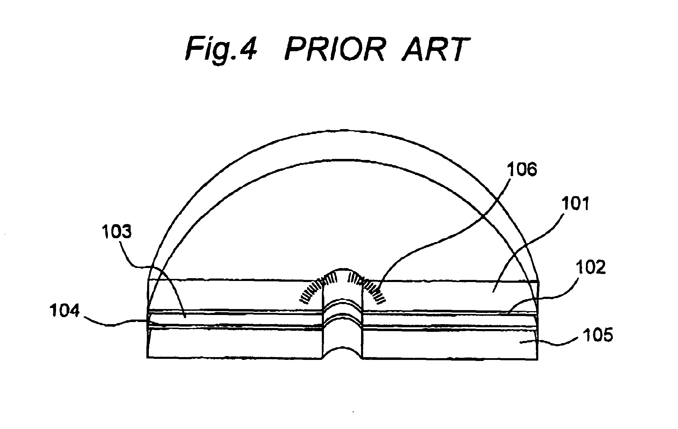

Fig. 4 shows one example of a configuration of a prior art DVD-ROM. This prior art DVD-ROM includes a first substrate 101 formed with pits on its one face, a first information recording layer 102 composed of the pits of the first substrate 101 and a reflective film formed on the pits, a second substrate 105 formed with pits on its one face, a second information recording layer 104 composed of the pits of the second substrate 105 and a reflective film formed on the pits, a space layer 103 disposed between the first and second information recording layers 102 and 104 and BCA marks 106 formed on the reflective film of the first information recording layer 102. In the prior art DVD-ROM, information is reproduced from a side of the second substrate 105. Meanwhile, the first information recording layer 102 is made of an Al alloy, while the second information recording layer 104 is made of Au.

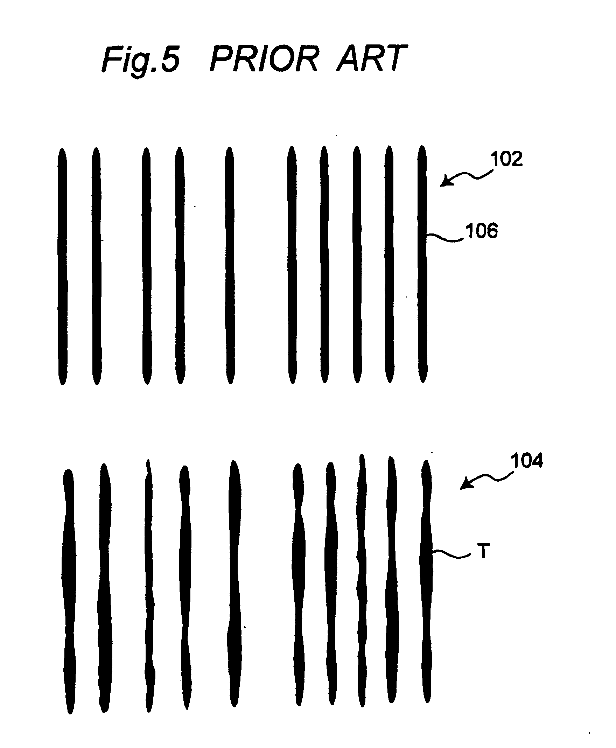

Fig. 5 mimetically shows the BCA marks 106 formed on the first information recording layer 102 of the prior art DVD-ROM of Fig. 4 by BCA working. In Fig. 5, the striped BCA marks 106 are formed on the first information recording layer 102 made of Al but working traces T are left on the second information recording layer 104 made of Au. It is considered that this phenomenon may happen because thermal diffusion in the second information recording layer 104 is insufficient due to the fact that a thermal conductivity of Au of the second information recording layer 104 is as small as about 1.3 times that of Al of the first information recording layer 102 as shown in Table 1 below.

**Table 1**

| Material | Thermal Conductivity (W·m⁻¹·K⁻¹) | | | |
|---|---|---|---|---|
| | 0°C | 100°C | 300°C | 700°C |
| Al | 236 | 240 | 233 | 92 |
| Au | 319 | 313 | 299 | 272 |

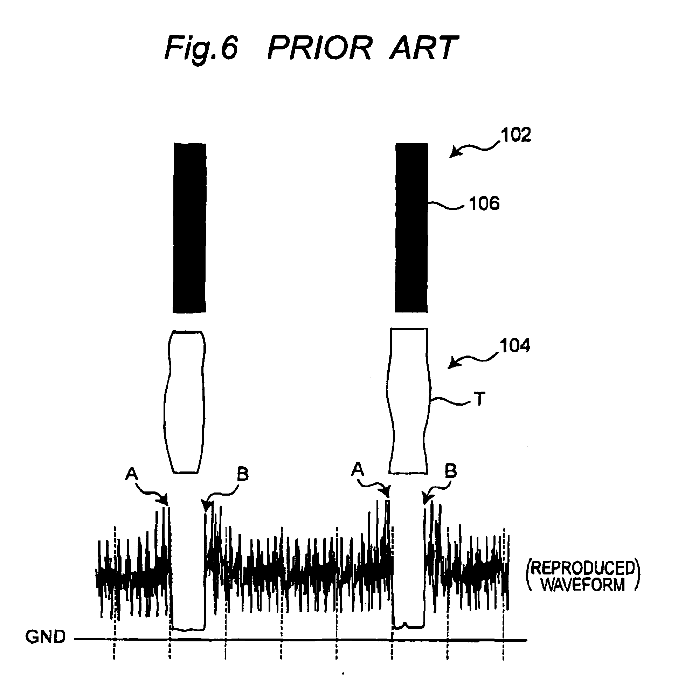

Fig. 6 shows a reproduced waveform of the BCA marks 106 of Fig. 5. In Fig. 6, a reproduction beam spot assumes a diameter of about 30 µm, Thus, if the reproduction beam spot partially falls on the working traces T, a transmission factor of the second information recording layer 104 rises substantially due to disappearance of the reflective film, As a result, when the BCA marks 106 formed on the first information recording layer 102 are reproduced, the reproduced waveform is distorted at a start end portion A and a final end portion B of each of the BCA marks 106.

### SUMMARY OF THE INVENTION

Accordingly, an essential object of the present invention is to provide, with a view to eliminating the above mentioned drawbacks of prior art, an information recording medium which is provided with a plurality of information recording layers including one information recording layer subjected to BCA working such that a thermal conductivity of a material of the remaining information recording layers is made as large as not less than 1.5 times that of a material of the one information recording layer.

Meanwhile, in the information recording layers, the one information recording layer subjected to BCA working is disposed closest to one of opposite faces of the information recording medium such that BCA working is performed from the one of the opposite faces of the information recording medium.

### BRIEF DESCRIPTION OF THE DRAWINGS

This object and features of the present invention will become apparent from the following description taken in conjunction with the preferred embodiment thereof with reference to the accompanying drawings in which:
Fig. 1 is a mimetic diagram showing a configuration of an optical disc according to an embodiment of the present invention;
Fig. 2 is a mimetic diagram of BCA marks formed on the optical disc of Fig. 1;
Fig. 3 is a mimetic diagram showing a reproduced waveform of the BCA marks of Fig. 2;
Fig. 4 is a mimetic diagram showing a configuration of a prior art optical disc;
Fig. 5 is a mimetic diagram of BCA marks formed on the prior art optical disc of Fig. 4; and
Fig. 6 is a mimetic diagram showing a reproduced waveform of the BCA marks of Fig. 5.

Before the description of the present invention proceeds, it is to be noted that like parts are designated by like reference numerals throughout several views of the accompanying drawings.

### DETAILED DESCRIPTION OF THE INVENTION

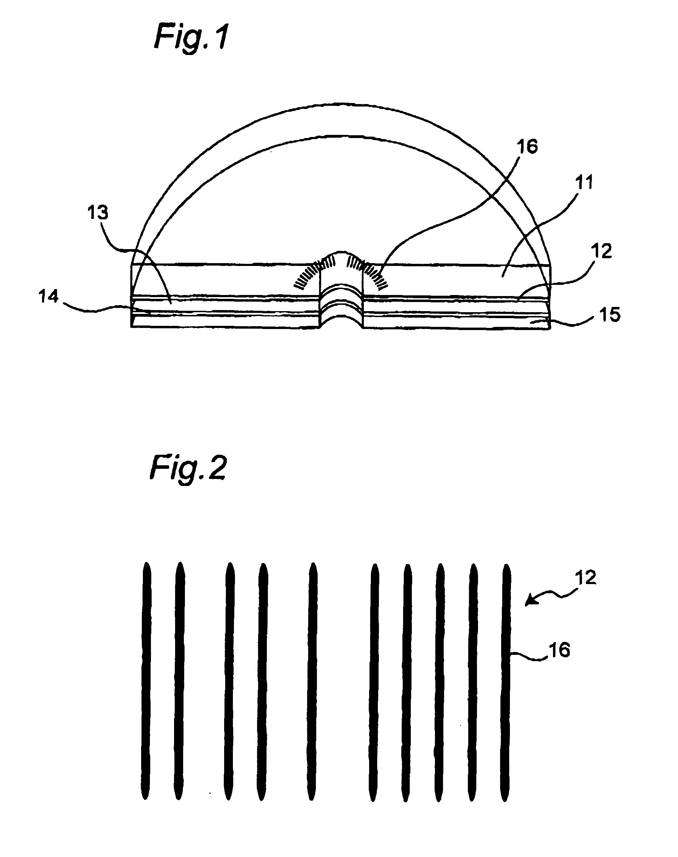

Hereinafter, an embodiment of the present invention is described with reference to the drawings. Fig. 1 mimetically shows a configuration of an optical disc according to the embodiment of the present invention. This optical disc has a configuration in which a polycarbonate substrate 11 formed with pits on its one face, a first information recording layer 12 composed of the pits of the substrate 11 and a reflective film formed on the pits, a space layer 13 formed with pits on its one face and made of ultraviolet curable resin and having a thickness of about 25 µm, a second information recording layer 14 composed of the pits of the space layer 13 and a reflective film formed on the pits and a cover layer 15 having a thickness of about 75 µm are stacked on one another, In the optical disc, information is reproduced from a side of the cover layer 15. Meanwhile, bar code-like BCA marks 16 are formed on the reflective film of the first information recording layer 12. The first information recording layer 12 is subjected to write-once recording of the BCA marks 16 and information is reproduced by reading the first information recording layer 12 with an optical head.

In this embodiment of the present invention, an Al alloy is used as a material of the reflective film of the first information recording layer 12, while an Ag alloy is used as a material of the reflective film of the second information recording layer 14. When a beam emitted from a YAG laser so as to be shaped into a rectangular form and having a wavelength of about 1064 nm is irradiated in a pulse state to the first information recording layer 12 from a side of the substrate 11 while the optical disc is being rotated synchronously by a rotary mechanism, the BCA marks 16 having intervals modulated by signals to be recorded are formed on the first information recording layer 12.

Fig. 2 mimetically shows the BCA marks 16 formed on the first information recording layer 12 and the BCA marks 16 are formed in a pattern of stripes each having a width of about 10 µm. At this time, no working trace is left on the second information recording layer 14.

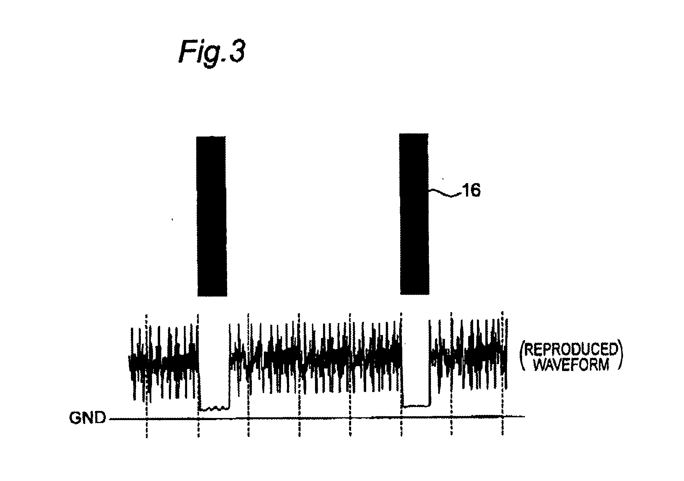

Fig. 3 shows a waveform obtained by reproducing the BCA marks 16 of the first information recording layer 12 by using a blue laser beam having a wavelength of 405 nm and an objective lens having a numerical aperture of 0.85. In Fig. 3, pits having random lengths are recorded on a ground GND subjected to working of the BCA marks 16 and reproduction signals are usually modulated. Since the reflective film is burnt off by the YAG laser, the BCA marks are reproduced as portions having low reflectance.

No working trace is left on the second information recording layer 14 on the ground that a thermal conductivity of the first information recording layer 12 is quite different from that of the second information recording layer 14. Table 2 below shows thermal conductivities at several temperatures In typical metals usable for the first and second information recording layers 12 and 14.

**Table 2**

| Material | Thermal Conductivity (W·m⁻¹·K⁻¹) | | | |
|---|---|---|---|---|
| | 0°C | 100°C | 300°C | 700°C |
| Al | 236 | 240 | 233 | 92 |
| Ag | 248 | 422 | 407 | 377 |
| Ni | 94 | 83 | 67 | 71 |
| Cu | 403 | 395 | 381 | 354 |

When the first information recording layer 12 is subjected to BCA wording, the reflective film of the first information recording layer 12 is heated by energy of the YAG laser. Therefore, in case the thermal conductivities of the first and second information recording layers 12 and 14 are compared with each other, it is necessary to make the comparison in several temperature ranges.

When Al used for the first information recording layer 12 is compared with Ag used for the second information recording layer 14, Ag has a thermal conductivity which is 1.75 times that of Al over a wide temperature range. Thus, Al of the first information recording layer 12 is worked by a recording beam through local accumulation of heat, while heat is effectively diffused in the second information recording layer 14, thereby presumably resulting in no working trace left on the second information recording layer 14.

It follows from this that a thermal conductivity of material of the second information recording layer 14 set to about 1.3 times that of material of the first information recording layer 12 as described earlier in Table 1 of prior art is insufficient and the fine effect is gained if the thermal conductivity of material of the second information recording layer 14 is set to 1.75 times that of material of the first information recording layer 12. Therefore, it is desirable that the thermal conductivity of material of the second information recording layer 14 is not less than 1.5 times that of material of the first information recording layer 12.

Furthermore, in an optical disc as a comparative example, an Al alloy is used as the first information recording layer 12 and an Ag alloy is used as the second information recording layer 14 and BCA working of the first information recording layer 12 is performed by irradiating from a side of the cover layer 15 with the YAG laser. As a result, upon increase of strength of the YAG laser required for forming the satisfactory BCA marks 16 on the first information recording layer 12, working traces are left on the second information recording layer 14. It is considered that such a phenomenon happens because thermal diffusion in the second information recording layer 14 is not performed sufficiently by direct irradiation of a more powerful laser beam over the second information recording layer 14 from the YAG laser.

Accordingly, in case one information recording layer subjected to BCA working, for example, the first information recording layer 12 is disposed closeset to one of opposite faces of the optical disc, it is desirable that the laser beam of the YAG laser is irradiated from the one of the opposite faces of the optical disc so as to reach the first information recording layer 12 earlier than the other information recording layer not subjected to BCA working, i.e., the second information recording layer 14.

Meanwhile, in this embodiment of the present invention, the Al alloy is used as the first information recording layer 12 and the Ag alloy is used as the second information recording layer 14 but the same effects can be achieved by other materials if a ratio of thermal conductivities of the materials is similar to that of the Al alloy and the Ag alloy. For example, from the thermal conductivities shown in Table 2, Ni or an alloy mainly consisting of Ni can be used as the first information recording layer 12, while Cu or an alloy mainly consisting of Cu can be used as the second information recording layer 14.

Moreover, this embodiment of the present invention employs the optical disc reproduced by using the objective lens having a numerical aperture of 0.85 and the blue laser beam having a wavelength of 405 nm. However, the present invention may be applied to also a conventional DVD-ROM in which it is possible to suppress formation of working traces on the other information recording layer (e.g., the second information recording layer 14) than the information recording layer (e.g., the first information recording layer 12) subjected to BCA working.

The present invention is applicable to usages in which permanent information is recorded on a reproduction type disc by burning off the reflective film with a laser or the like. Especially, the present invention can be used for applications in which write-once recording of information is performed on only a desired recording layer in discs for reproduction only each having a plurality of recording layers, which include a DVD-ROM and a reproduction type disc (ROM) such as a Blu-ray Disc.

In the present invention, the following effects are obtained. Firstly, in an arrangement in which the thermal conductivity of material of the one information recording layer subjected to BCA working is made smaller than that of the remaining information recording layers, diffusion rate of irradiation heat is retarded in the one information recording layer so as to make the irradiation heat stagnant in the one information recording layer such that the one information recording layer is worked readily, while thermal diffusion is promoted in the remaining information recording layers such that the remaining information recording layers are set to a state unsuitable for working and thus, damage to the remaining information recording layers can be lessened. As a result, the BCA marks can be satisfactorily formed on only the one information recording layer subjected to BCA working and it is possible to prevent working traces from being left on the remaining information recording layers.

Secondly, if the one information recording layer subjected to BCA working is disposed closest to the one of the opposite faces of the information recording medium in the information recording layers and BCA working is performed from the one of the opposite faces of the information recording medium, influence of BCA working on the remaining information recording layers can be lessened further.

## Claims

1. A reproduction type information recording medium which is provided with a plurality of information recording layers (12, 14) including one information recording layer (12) having bar code-like marks (16) subjected to write-once recording,
wherein a thermal conductivity of a material of other information recording layers (14) than the one information recording layer (12) is set to be not less than 1.5 times that of a material of the one information recording layer (12).

2. The information recording medium as claimed in Claim 1, wherein the material of the one information recording layer (12) is one of Al, Ni, an alloy mainly consisting of Al and an alloy mainly consisting of Ni.

3. The information recording medium as claimed in Claim 1, wherein one (14) of the other information recording layers lies next to the one information recording layer (12) and the material of the one (14) of the other information recording layers is one of Ag, Cu, an alloy mainly consisting of Ag and an alloy mainly consisting of Cu

4. The information recording medium as claimed in Claim 1, wherein in the information recording layers (12, 14), the one information recording layer (12) is disposed most distant from an information reproduction side (15).

5. The information recording medium as claimed in Claim 1, wherein in the information recording layers (12, 14), the one information recording layer (12) is disposed closest to an information reproduction side (15).

6. A method of recording bar code-like marks (16) on a reproduction type information recording medium provided with a plurality of information recording layers (12, 14) including one information recording layer (12) having the bar code-like marks (16) subjected to write-once recording, comprising the steps of:
disposing, in the information recording layers (12, 14), the one information recording layer (12) closest to one of opposite faces of the information recording medium; and
performing exposure from the one of the opposite faces of the information recording medium by a recording beam for forming the bar code-like marks (16).
